# EUROPÄISCHE PATENTANMELDUNG

(11) **EP 2 180 588 A1**
(43) Veröffentlichungstag der Anmeldung: **28.04.2010**
(21) Anmeldenummer: 09013274.7
(22) Anmeldetag: 21.10.2009
(51) Int. Cl.: H02M 5/293, H05B 37/02

(54) **Schaltungsanordnung und Verfahren zur Steuerung der Leistungsaufnahme von Beleuchtungsanlagen mit Wechselspannungsspeisung**

(30) Priorität: 21.10.2008 DE 102008052532
(71) Anmelder: Könnecke, Tilo, 31162 Bad Salzdetfurth (DE)
(72) Erfinder: Könnecke, Tilo, 31162 Bad Salzdetfurth (DE)
(74) Vertreter: Schmidt, Oliver

(57) **Zusammenfassung**

Um die Leistungsaufnahme von an ein Wechselspannungsnetz angeschlossenen Verbrauchern, die insbesondere Gasentladungslampen umfassen, auf einfache und kostengünstige Weise zu steuern, sieht die Erfindung eine Schaltungsanordnung (100) vor, welche eine erste und zweite Leistungsschaltereinheit (200, 300) aufweist, wobei die Leistungsschaltereinheiten von einer mit diesen verbundenen Steuereinheit (160) derart angesteuert werden, dass die Verbraucher (401-40N, 501) in sich abwechselnden zeitlichen Phasen Energie aus dem Wechselspannungsnetz aufnehmen und Energie in das Wechselspannungsnetz zurückspeisen, wobei während der Phasen der Leistungsaufnahme die Versorgungsspannung zur Steuerung der Leistungsaufnahme pulsweitenmoduliert wird.

Ferner sieht die Erfindung ein Verfahren zum Betreiben einer solchen Schaltungsanordnung, sowie eine Steuereinheit zum Einsatz in einer solchen Schaltungsanordnung vor.

## Beschreibung

Die Erfindung betrifft allgemein die Leistungselektronik und insbesondere eine Schaltungsanordnung und ein Verfahren zum Steuern der Leistungsaufnahme von Verbrauchern, insbesondere zur Leistungsreduzierung von Beleuchtungsmitteln wie Gasentladungslampen.

Ein bekanntes Verfahren zum Steuern der Leistungsaufnahme von an ein Wechselspannungsnetz angeschlossenen Verbrauchern ist die Phasenanschnittsteuerung. Bei dieser Methode werden jedoch in nachteiliger Weise Spannungsspitzen erzeugt, die das Stromnetz mit nicht-sinusförmigen Strömen belasten.

Eine Reduzierung der Leistungsaufnahme kann auch durch ein Absenken der Versorgungsspannung erfolgen. Zu diesem Zweck kann beispielsweise ein Spartransformator eingesetzt werden, welcher eine Spule umfasst, die zur Entnahme unterschiedlicher Ausgangsspannungen mehrere ausgangsseitige Abgriffe aufweist. Vorteilhaft ist der robuste Aufbau eines Spartransformators, sowie das fehlende Auftreten von Oberschwingungen bei dessen Einsatz. Nachteilig ist jedoch der begrenzte Bereich der Spannungsabsenkung sowie die hohen Materialkosten. Zudem stellt der Spartransformator einen zusätzlichen induktiven Verbraucher dar. Ferner sind für eine lineare Absenkung der Spannung viele mechanische Bauteile erforderlich.

Aus DE 102 055 52 A1 ist ferner ein Verfahren und eine Schaltungsanordnung zur Helligkeitssteuerung von Gasentladungslampen bekannt, wobei ein Frequenzumrichter mit einem Gleichstromzwischenkreis und einer speziellen Ausgangsschaltung zur Ansteuerung der Gasentladungslampen eingesetzt wird. In nachteiliger Weise ist die in DE 102 055 52 A1 beschriebene Schaltungsanordnung nur für Gasentladungslampen geeignet und erlaubt keinen Mischbetrieb von zum Beispiel Gasentladungs- und Glühlampen. Ferner erfordert das in DE 102 055 52 A1 beschriebene Verfahren eine genaue Abstimmung auf die jeweiligen Bedingungen und ist daher auch sehr störanfällig.

Bekannte Systeme zur Leistungsreduzierung in Wechselspannungsnetzen mit mehreren Leuchtmitteln als Verbraucher, insbesondere in Netzen, die zu einem großen Teil aus Gasentladungslampen bestehen, sind somit entweder zu kostenaufwendig oder nur bedingt alltagstauglich.

Der Erfindung liegt daher die Aufgabe zugrunde, einen Weg aufzuzeigen, wie die Leistungsaufnahme von an ein Wechselspannungsnetz angeschlossenen Verbrauchern, welche insbesondere als eine Reihenschaltung einer Gasentladungslampe und einer Induktivität, auf einfache und kostengünstige Weise gesteuert, insbesondere reduziert werden kann. Weitere Aufgabe der Erfindung ist es, eine Schaltungsanordnung zur Steuerung der Leistungsaufnahme von an ein Wechselspannungsnetz angeschlossenen Verbrauchern anzugeben, welches sich auf einfache und kostengünstige Weise in bestehende Wechselstromnetze für Beleuchtungsanlagen integrieren lässt.

Diese Aufgabe wird durch eine Schaltungsanordnung gemäß Anspruch 1, sowie durch ein Verfahren gemäß Anspruch 13 und ein Steuergerät gemäß Anspruch 15 gelöst. Vorteilhafte Ausführungsformen und Weiterbildungen sind in den jeweiligen Unteransprüchen angegeben.

Dementsprechend sieht die Erfindung eine Schaltungsanordnung zur Steuerung der Leistungsaufnahme von zum Betreiben in einem Wechselspannungsnetz ausgebildeten Verbrauchern vor, welche einen ersten und einen zweiten Eingangsanschluss zum Anschließen an eine Versorgungsspannung eines Wechselspannungsnetzes und einen ersten und zweiten Ausgangsanschluss zum parallelen Anschließen der Verbraucher umfasst. Der zweite Eingangsanschluss, welcher typischerweise den Netzbezugspunkt bildet, ist mit dem zweiten Ausgangsanschluss verbunden. Ferner umfasst die Schaltungsanordnung eine erste Leistungsschaltereinheit mit zwei Anschlüssen, von denen einer mit dem ersten Eingangsanschluss und der andere mit dem ersten Ausgangsanschluss verbunden ist, und eine zweite Leistungsschaltereinheit mit zwei Anschlüssen, von denen einer mit dem ersten Ausgangsanschluss und der andere mit dem zweiten Ausgangsanschluss verbunden ist, wobei jede der Leistungsschaltereinheiten derart steuerbar ausgebildet ist, dass diese zwischen ihren jeweiligen beiden Anschlüssen in jede der beiden Richtungen unabhängig voneinander wahlweise einen leitenden oder sperrenden Schaltzustand annehmen kann. Weiterhin umfasst die Schaltungsanordnung eine mit der ersten und zweiten Leistungsschaltereinheit verbundene Steuereinheit, welche dazu ausgebildet ist, die Leistungsschaltereinheiten derart anzusteuern, dass die Verbraucher in sich abwechselnden zeitlichen Phasen Energie aus dem Wechselspannungsnetz aufnehmen und Energie in das Wechselspannungsnetz zurückspeisen, wobei während der Phasen der Leistungsaufnahme die Versorgungsspannung zur Steuerung der Leistungsaufnahme pulsweitenmoduliert wird.

Vorteilhaft ist die Steuereinheit ferner dazu ausgebildet, die Leistungsschaltereinheiten derart anzusteuern, dass während der Phasen der Energierückspeisung die Verbraucherspannung zur Steuerung der Energierückspeisung pulsweitenmoduliert wird. Hierdurch wird auf vorteilhafte Weise ermöglicht, versorgungsseitig einen vorgegebenen, insbesondere sinusförmigen, Stromverlauf zu gewährleisten.

Die Schaltungsanordnung dient vorzugsweise zur Absenkung des Stromflusses in Wechselspannungsnetzen mit mehreren Leuchtmitteln als Verbraucher, wobei sich durch die Reduzierung der Energieverbrauch verringert. Besonders vorteilhaft ist die Schaltungsanordnung zum Steuern der Leistungsaufnahme von Beleuchtungsanlagen ausgelegt, welche eine Mehrzahl von Gasentladungslampen, beispielsweise zur Straßenbeleuchtung, umfassen.

In bestehenden Beleuchtungsanlagen, in denen Gasentladungslampen eingesetzt werden, weisen diese aufgrund der erforderlichen Beschaltung typischerweise Vorschaltgeräte auf, wobei konventionelle Vorschaltgeräte von Gasentladungslampen insbesondere eine in Reihe mit der Lampe geschaltete Vorschaltdrossel zur Strombegrenzung umfassen.

Dementsprechend ist die Schaltungsanordnung vorteilhaft zum Betreiben von Verbrauchern ausgebildet, welche wenigstens einen Verbraucher umfassen, der als eine Reihenschaltung einer Gasentladungslampe und einer Induktivität ausgebildet ist, wobei die Gesamtlast der Verbraucher dementsprechend einen induktiven Charakter aufweist. Besonders vorteilhaft ist die Schaltungsanordnung auch für einen Mischbetrieb ausgelegt, d.h. zum Steuern der Leistungsaufnahme einer Mehrzahl unterschiedlich ausgebildeter Verbraucher, die beispielsweise sowohl Gasentladungslampen als auch Glühlampen umfassen.

Somit wird durch die Funktionsweise der Schaltungsanordnung eine Reduzierung der Leistungsaufnahme von Verbrauchern ermöglicht, die eine induktive und ohmsche Last aufweisen. Die Leistungsaufnahme wird dabei durch eine Pulsweitenmodulation der Versorgungsspannung gesteuert, durch die der ausgangsseitige Stromfluss begrenzt wird, wobei der Grad der Leistungsreduktion durch das Pulspausenverhältnis der Pulsweitenmodulation eingestellt wird.

Die Pulsweitenmodulation der Versorgungsspannung zur Erzeugung einer pulsweitenmodulierten Ausgangsspannung erfolgt während der Phasen der Leistungsaufnahme vorzugsweise mittels der ersten Leistungsschaltereinheit, indem während eines "Pulses" die an den Eingangsanschlüssen anliegende Versorgungsspannung durch Verbinden des ersten Eingangsanschlusses mit dem ersten Ausgangsanschluss an den Ausgang durchgeschaltet wird und somit eine Energieentnahme aus dem Versorgungsnetz ermöglicht wird, und während einer "Pause" die an den Eingangsanschlüssen anliegende Versorgungsspannung durch Trennen des ersten Eingangsanschlusses von dem ersten Ausgangsanschluss vom Ausgang getrennt wird und somit eine Energieentnahme aus dem Versorgungsnetz unterbunden wird. Durch die Pulsweitenmodulation der Versorgungsspannung wird die Ausgangsspannung der Schaltungsanordnung somit derart gesteuert, dass diese im Wesentlichen zwischen der jeweils aktuell anliegenden Versorgungsspannung und Null wechselt.

In einer vorteilhaften Ausführungsform der Erfindung wird ferner die Energierückspeisung in das Versorgungsnetz durch eine Pulsweitenmodulation gesteuert, wobei das Maß der Energierückspeisung durch das Pulspausenverhältnis der Pulsweitenmodulation eingestellt wird.

Die Pulsweitenmodulation der Verbraucherspannung erfolgt während der Phasen der Energierückspeisung vorzugsweise durch abwechselndes Verbinden und Trennen des ersten und zweiten Ausgangsanschlusses mittels der zweiten Leistungsschaltereinheit. Während eines "Pulses" sind der erste und zweite Ausgangsanschluss nicht über die zweite Leistungsschaltereinheit verbunden, so dass der durch den magnetischen Fluss in den Induktivitäten der Verbraucher verursachte Strom eine Energierückspeisung in das Versorgungsnetz bewirkt. Während einer "Pause" sind der erste und zweite Ausgangsanschluss über die zweite Leistungsschaltereinheit direkt miteinander verbunden, so dass der durch den magnetischen Fluss in den Induktivitäten der Verbraucher verursachte Strom aufrecht erhalten wird und somit keine Energierückspeisung in das Versorgungsnetz erfolgt. Es erfolgt somit eine Pulsweitenmodulation der Verbraucherspannung, d.h. der zwischen den Ausgangsanschlüssen der Schaltungsanordnung aufgrund des magnetischen Flusses in den Induktivitäten der angeschlossenen Verbraucher erzeugten Spannung, wodurch eine Steuerung der Energierückspeisung ermöglicht wird. Auch während der Phasen der Energierückspeisung wird durch die Pulsweitenmodulation der Verbraucherspannung die Schaltungsanordnung derart gesteuert, dass diese im Wesentlichen zwischen der jeweils aktuell anliegenden Versorgungsspannung und Null wechselt.

Erfolgt auch in den Phasen der Energierückspeisung eine Pulsweitenmodulation, so wird selbstverständlich das Maß der Leistungsreduktion der Verbraucher sowohl durch das Pulspausenverhältnis der Pulsweitenmodulation während der Phasen der Leistungsaufnahme als auch durch das Pulspausenverhältnis der Pulsweitenmodulation während der Phasen der Energierückspeisung bestimmt.

Die Frequenz der Pulsweitenmodulation ist vorzugsweise konstant und zweckmäßigerweise deutlich größer als die Frequenz der an den Eingängen anliegenden Wechselspannung, vorzugsweise um einen Faktor von über 10, insbesondere über 20, insbesondere über 50, insbesondere über 100. In einer beispielhaften Ausführungsform hat der Faktor einen Wert von etwa 400, geeignete höhere Werte liegen jedoch ebenso im Rahmen der Erfindung. Die Periodendauer des durch Pulsweitenmodulation der Versorgungsspannung erzeugten Spannungssignals ergibt sich aus der Summe der Puls- und Pausendauer, das Pulspausenverhältnis aus dem Verhältnis zwischen Pulsdauer und Pausendauer. Das sich ergebende einstellbare Tastverhältnis als Verhältnis zwischen Pulsdauer und Periodendauer ist ein Maß für die Leistungsaufnahme, wobei ein Tastverhältnis von 1 einer maximalen Leistungsaufnahme entspricht. Bei Glühlampen als Verbraucher ist das Tastverhältnis im Wesentlichen proportional zur Leistungsaufnahme, bei Gasentladungslampen reduziert sich die Leistungsaufnahme überproportional bei Reduzierung des Tastverhältnisses. Die Reduktion der Lichtleistung bei Glüh- und Gasentladungslampen ist näherungsweise proportional zur Leistungsreduktion.

Zum Ermöglichen der oben beschriebenen Funktionalität der Leistungsschaltereinheiten weisen diese vorzugsweise jeweils zwei parallel zwischen ihren beiden Anschlüssen angeordnete Schaltungszweige auf, die jeweils eine Diode und einen mit der Diode in Reihe geschalteten Leistungsschalter umfassen, wobei die Dioden in den Schaltungszweigen in entgegengesetzter Durchlassrichtung angeordnet sind, und die Leistungsschalter mittels der Steuereinheit steuerbar sind. In einer alternativen Ausführungsform weisen die Leistungsschaltereinheiten vorteilhaft zwei in Reihe zwischen ihren beiden Anschlüssen angeordnete Schaltungszweige auf, die jeweils einen Leistungsschalter und eine zu diesem parallel geschaltete Diode umfassen, wobei die Dioden in den Schaltungszweigen in entgegengesetzter Durchlassrichtung angeordnet sind, und die Leistungsschalter mittels der Steuereinheit steuerbar sind. Der Begriff Leistungsschalter bezeichnet jede Art eines geeigneten, von einer elektronischen Steuereinheit steuerbaren Schalters. Die Leistungsschalter können insbesondere vorteilhaft als elektronische Schalter ausgebildet sein.

Besonders vorteilhaft ist die Steuereinheit dazu ausgebildet, in unterschiedlichen zeitlichen Phasen die Leistungsschaltereinheiten auf unterschiedliche Weise anzusteuern, wobei die Anfangs- bzw. Endzeitpunkte dieser Phasen insbesondere durch die Nulldurchgänge der Versorgungsspannung und die Nulldurchgänge des durch die Verbraucher fließenden Stroms definiert sind. Da die Gesamtlast der typischerweise eine Mehrzahl von Gasentladungslampen umfassenden Verbraucher in der Regel induktiven Charakter aufweist, eilt der Spannungsverlauf dem Stromverlauf voraus, so dass während einer Periode der Versorgungsspannung durch die oben genannten Nulldurchgänge vier zeitliche Phasen definiert werden, da zwischen zwei Nulldurchgängen der Versorgungsspannung ein Nulldurchgang, d.h. ein Wechsel der Richtung des Verbraucherstroms erfolgt. Insbesondere erfolgt in den Phasen, in denen die Versorgungsspannung und der Verbraucherstrom das gleiche Vorzeichen haben und die Verbraucher somit Energie aufnehmen, und in den Phasen, in denen die Versorgungsspannung und der Verbraucherstrom entgegengesetzte Vorzeichen haben und die Verbraucher somit Energie in das Versorgungsnetz zurückspeisen, eine unterschiedliche Ansteuerung der Leistungsschaltereinheiten durch die Steuereinheit.

Zum Detektieren der Nulldurchgänge der Versorgungsspannung weist die Schaltungsanordnung vorzugsweise eine an die Steuereinheit angeschlossene Spannungs-Messeinrichtung zum Messen und/oder zum Detektieren des Vorzeichens der an den Eingangsanschlüssen anliegenden Spannung auf, sowie zum Detektieren der Nulldurchgänge des Verbraucherstroms eine an die Steuereinheit angeschlossene Spannungs-Messeinrichtung zum Messen und/oder zum Detektieren des Vorzeichens der an der ersten Leistungsschaltereinheit abfallenden Spannung.

In einem ersten besonders vorteilhaften Ausführungsbeispiel ist die Steuereinheit dazu ausgebildet, die Leistungsschaltereinheiten derart anzusteuern, dass während einer Periode der Versorgungsspannung vier zeitlich aufeinanderfolgende Phasen durchlaufen werden, wobei in der ersten Phase am ersten Eingangsanschluss relativ zum zweiten Eingangsanschluss eine positive Spannung anliegt, die erste Leistungsschaltereinheit in Richtung vom ersten Eingangsanschluss zum ersten Ausgangsanschluss wechselweise leitet und sperrt, um eine pulsweitenmodulierte Ausgangsspannung zu generieren, und in Richtung vom ersten Ausgangsanschluss zum ersten Eingangsanschluss sperrt, und die zweite Leistungsschaltereinheit vom zweiten Ausgangsanschluss zum ersten Ausgangsanschluss leitet und in Gegenrichtung sperrt, so dass durch die Verbraucher vom ersten Ausgangsanschluss zum zweiten Ausgangsanschluss ein Strom fließt, dessen Stromstärke durch die Pulsweite der Pulsweitenmodulation gesteuert wird, in der zweiten Phase am ersten Eingangsanschluss relativ zum zweiten Eingangsanschluss eine negative Spannung anliegt, die erste Leistungsschaltereinheit in Richtung vom ersten Eingangsanschluss zum ersten Ausgangsanschluss leitet, und die zweite Leistungsschaltereinheit in beiden Richtungen sperrt, wobei durch einen durch die Verbraucher vom ersten Ausgangsanschluss zum zweiten Ausgangsanschluss fließenden Strom eine Energierückspeisung in das Wechselspannungsnetz erfolgt, in der dritten Phase am ersten Eingangsanschluss relativ zum zweiten Eingangsanschluss eine negative Spannung anliegt, die erste Leistungsschaltereinheit in Richtung vom ersten Ausgangsanschluss zum ersten Eingangsanschluss wechselweise leitet und sperrt, um eine pulsweitenmodulierte Ausgangspannung zu generieren, und in Richtung vom ersten Eingangsanschluss zum ersten Ausgangsanschluss sperrt, und die zweite Leistungsschaltereinheit vom ersten Ausgangsanschluss zum zweiten Ausgangsanschluss leitet und in Gegenrichtung sperrt, so dass durch die Verbraucher vom zweiten Ausgangsanschluss zum ersten Ausgangsanschluss ein Strom fließt, dessen Stromstärke durch die Pulsweite der Pulsweitenmodulation gesteuert wird, und in der vierten Phase am ersten Eingangsanschluss relativ zum zweiten Eingangsanschluss eine positive Spannung anliegt, die erste Leistungsschaltereinheit in Richtung vom ersten Ausgangsanschluss zum ersten Eingangsanschluss leitet, und die zweite Leistungsschaltereinheit in beiden Richtungen sperrt, wobei durch einen durch die Verbraucher vom zweiten Ausgangsanschluss zum ersten Ausgangsanschluss fließenden Strom eine Energierückspeisung in das Wechselspannungsnetz erfolgt.

In den Phasen der Energieaufnahme durch die Verbraucher wird mittels einer Pulsweitenmodulation, welche je nach eingestelltem Grad der Leistungsreduktion ein bestimmtes Pulspausenverhältnis bzw. Tastverhältnis aufweist, während eines Pulses die Versorgungsspannung als Ausgangsspannung an die Verbraucher durchgeschaltet und während einer Pause von diesen getrennt. In den Pausen während der Pulsweitenmodulation, also in den Zeitbereichen ohne Kopplung, tritt durch die Spulen der Verbraucher ein Vorzeichenwechsel der Spulenspannung auf, so dass der Strom über die zweite Leistungsschaltereinheit weiter fließen kann.

In Phasen der Energierückspeisung durch die Verbraucher, wenn also die Versorgungsspannung und der Verbraucherstrom ein entgegengesetztes Vorzeichen aufweisen, wird die Verbraucherseite über die erste Leistungsschaltereinheit mit der Versorgungsseite verbunden, wodurch besonders vorteilhaft eine direkte Kopplung der Verbraucherseite mit der Versorgungsseite erfolgt.

In einem zweiten besonders vorteilhaften Ausführungsbeispiel ist die Steuereinheit dazu ausgebildet, die Leistungsschaltereinheiten derart anzusteuern, dass während einer Periode der Versorgungsspannung vier zeitlich aufeinanderfolgende Phasen durchlaufen werden, wobei in der ersten Phase am ersten Eingangsanschluss relativ zum zweiten Eingangsanschluss eine positive Spannung anliegt, die erste Leistungsschaltereinheit in Richtung vom ersten Eingangsanschluss zum ersten Ausgangsanschluss gemäß einer ersten Pulsweitenmodulation wechselweise leitet und sperrt, um eine pulsweitenmodulierte Ausgangspannung zu generieren, und in Richtung vom ersten Ausgangsanschluss zum ersten Eingangsanschluss sperrt, die zweite Leistungsschaltereinheit vom zweiten Ausgangsanschluss in Richtung zum ersten Ausgangsanschluss leitet und in Gegenrichtung sperrt, so dass durch die Verbraucher vom ersten Ausgangsanschluss zum zweiten Ausgangsanschluss ein Strom fließt, dessen Stromstärke durch die Pulsweite der ersten Pulsweitenmodulation gesteuert wird, in der zweiten Phase am ersten Eingangsanschluss relativ zum zweiten Eingangsanschluss eine negative Spannung anliegt, die erste Leistungsschaltereinheit in Richtung vom ersten Eingangsanschluss zum ersten Ausgangsanschluss leitet und in Gegenrichtung sperrt, die zweite Leistungsschaltereinheit in Richtung vom zweiten Ausgangsanschluss zum ersten Ausgangsanschluss gemäß einer zweiten Pulsweitenmodulation wechselweise leitet und sperrt, und in Gegenrichtung sperrt, wobei durch einen durch die Verbraucher vom ersten Ausgangsanschluss zum zweiten Ausgangsanschluss fließenden Strom eine durch die Pulsweite der zweiten Pulsweitenmodulation gesteuerte Energierückspeisung in das Wechselspannungsnetz erfolgt, in der dritten Phase am ersten Eingangsanschluss relativ zum zweiten Eingangsanschluss eine negative Spannung anliegt, die erste Leistungsschaltereinheit in Richtung vom ersten Ausgangsanschluss zum ersten Eingangsanschluss gemäß der ersten Pulsweitenmodulation wechselweise leitet und sperrt, um eine pulsweitenmodulierte Ausgangspannung zu generieren, und in Richtung vom ersten Eingangsanschluss zum ersten Ausgangsanschluss sperrt, die zweite Leistungsschaltereinheit in Richtung vom ersten Ausgangsanschluss zum zweiten Ausgangsanschluss leitet und in Gegenrichtung sperrt, so dass durch die Verbraucher vom zweiten Ausgangsanschluss zum ersten Ausgangsanschluss ein Strom fließt, dessen Stromstärke durch die Pulsweite der ersten Pulsweitenmodulation gesteuert wird, und in der vierten Phase am ersten Eingangsanschluss relativ zum zweiten Eingangsanschluss eine positive Spannung anliegt, die erste Leistungsschaltereinheit in Richtung vom ersten Ausgangsanschluss zum ersten Eingangsanschluss leitet und in Gegenrichtung sperrt, die zweite Leistungsschaltereinheit in Richtung vom ersten Ausgangsanschluss zum zweiten Ausgangsanschluss gemäß der zweiten Pulsweitenmodulation wechselweise leitet und sperrt, und in Gegenrichtung sperrt, wobei durch einen durch die Verbraucher vom zweiten Ausgangsanschluss zum ersten Ausgangsanschluss fließenden Strom eine durch die Pulsweite der zweiten Pulsweitenmodulation gesteuerte Energierückspeisung in das Wechselspannungsnetz erfolgt.

In den Phasen der Energieaufnahme durch die Verbraucher entspricht die Ansteuerung der Leistungsschaltereinheiten der oben für das erste Ausführungsbeispiel beschriebenen, wobei mittels einer ersten Pulsweitenmodulation die Versorgungsspannung wechselweise als Ausgangsspannung an die Verbraucher durchgeschaltet und von diesen getrennt wird.

In Phasen der Energierückspeisung durch die Verbraucher, wenn also die Versorgungsspannung und der Verbraucherstrom ein entgegengesetztes Vorzeichen aufweisen, wird mittels einer zweiten Pulsweitenmodulation, welche je nach eingestelltem Grad der Leistungsreduktion und gewünschtem versorgungsseitigem Stromverlauf ein bestimmtes Pulspausenverhältnis bzw. Tastverhältnis aufweist, während einer Pause die Anschlüsse der Verbraucherseite über die zweite Leistungsschaltereinheit miteinander verbunden, so dass der durch den magnetischen Fluss in den Verbraucherspulen verursachte Strom aufrecht erhalten wird. In den Pulsen während der Pulsweitenmodulation, also in den Zeitbereichen ohne Kopplung, tritt durch die Spulen der Verbraucher eine Spannungserhöhung auf, so dass der Strom über die erste Leistungsschaltereinheit fließt und so eine Energierückspeisung bewirkt.

Die Schaltungsanordnung ist insbesondere für den Betrieb einer Mehrzahl von Leuchtmitteln, welche sowohl Gasentladungslampen als auch Glühlampen umfassen, ausgebildet. Bei einem Einsatz der Schaltungsanordnung in bestehenden Verbrauchernetzen mit Gasentladungslampen als Verbraucher ist es nicht zwingend erforderlich, die Schaltungsanordnung in besonderer Weise an Art und Anzahl der angeschlossenen Verbraucher anzupassen. Vorteilhaft können jedoch Komponenten zur Kompensation einer durch die Induktivitäten der Verbraucher verursachten Blindleistung vorgesehen sein.

Die Schaltungsanordnung kann ferner vorteilhaft einen vorzugsweise eingangsseitig angeordneten Netzfilter umfassen, dessen Komponenten zur Reduzierung der Wirkung von durch die Schaltungsanordnung verursachten Störungen auf das Wechselspannungsnetz, insbesondere zur Glättung einer pulsförmigen Stromaufnahme aus dem Wechselspannungsnetz dienen.

Bei Verbrauchern mit nicht sinusförmiger Stromaufnahme kann vorteilhaft unter Verwendung eines an die Steuereinheit angeschlossenen Strommessers zum Messen des Eingangsstroms auf der Versorgungsseite ein sinusförmiger Eingangsstrom erzeugt werden. Zu diesem Zweck erfolgt eine entsprechende Steuerung des Pulspausenverhältnisses der Pulsweitenmodulation der Versorgungsspannung und gegebenenfalls der Verbraucherspannung, wobei insbesondere das Pulspausenverhältnis der einzelnen Perioden variiert wird.

Als sinusförmiger Eingangsstrom ist in diesem Zusammenhang ein Strom gemeint, der aus einer Vielzahl von Einzelimpulsen besteht, die in ihrer Gesamtheit einen sinusförmigen Verlauf ergeben.

Mittels des Strommessers zum Messen des Eingangsstroms kann ferner vorteilhaft eine Überwachung der Leistungsaufnahme sowie eine Erkennung von Lampenausfällen erfolgen.

Ein erfindungsgemäßes Verfahren zur Steuerung der Leistungsaufnahme von zum Betreiben in einem Wechselspannungsnetz ausgebildeten Verbrauchern, welche wenigstens einen Verbraucher umfassen, der als eine Reihenschaltung einer Gasentladungslampe und einer Induktivität ausgebildet ist, verwendet eine Schaltungsanordnung wie oben beschrieben. Das Verfahren sieht vor, dass die Leistungsschaltereinheiten mittels der Steuereinheit derart angesteuert werden, dass die Verbraucher in sich abwechselnden zeitlichen Phasen Energie aus dem Wechselspannungsnetz aufnehmen und Energie in das Wechselspannungsnetz zurückspeisen, wobei während der Phasen der Leistungsaufnahme die Versorgungsspannung zur Steuerung der Leistungsaufnahme pulsweitenmoduliert wird.

Vorteilhaft wird auch während der Phasen der Energierückspeisung die Verbraucherspannung zur Steuerung der Energierückspeisung pulsweitenmoduliert.

Das Verfahren kann vorteilhaft Schritte umfassen, welche analog zu den oben beschriebenen vorteilhaften Ausführungsformen einer erfindungsgemäßen Schaltungsanordnung ausgestaltet sind. Insbesondere umfasst das erfindungsgemäße Verfahren vorzugsweise das Ansteuern der ersten und zweiten Leistungsschaltereinheiten entsprechend der oben beschriebenen Phasen mittels der Steuereinheit.

Ferner liegt auch eine Steuereinheit zur Verwendung in einer Schaltungsanordnung wie oben beschrieben, welche zum Ausführen des oben beschriebenen Verfahrens ausgebildet ist, im Rahmen der Erfindung.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung einer Schaltungs- anordnung zur Veranschaulichung des Wirkprinzips einer bevorzugten Ausführungsform eines erfindungsgemäßen Verfahrens,
- Fig. 2a:: eine schematische Darstellung von Spannungs- und Stromverläufen in der in Fig. 1 gezeigten Schaltungsanordnung für ein erstes bevorzugtes Ausführungsbeispiel,
- Fig. 2b:: eine schematische Darstellung von Spannungs- und Stromverläufen in der in Fig. 1 gezeigten Schaltungsanordnung für ein zweites bevorzugtes Ausführungsbeispiel,
- Fig. 3:: eine schematische Darstellung einer bevorzugten Ausführungsform einer erfindungsgemäßen Schaltungsanordnung mit daran angeschlossenen Verbrauchern,
- Fig. 4a:: schematisch eine erste Ausführungsform einer Leistungsschaltereinheit zur Verwendung in einer erfindungsgemäßen Schaltungsanordnung,
- Fig. 4b:: schematisch eine zweite Ausführungsform einer Leistungsschaltereinheit zur Verwendung in einer erfindungsgemäßen Schaltungsanordnung,
- Fig. 4c:: schematisch eine dritte Ausführungsform einer Leistungsschaltereinheit zur Verwendung in einer erfindungsgemäßen Schaltungsanordnung,
- Fig. 4d:: schematisch eine vierte Ausführungsform einer Leistungsschaltereinheit zur Verwendung in einer erfindungsgemäßen Schaltungsanordnung, und
- Fig. 4e:: schematisch eine fünfte Ausführungsform einer Leistungsschaltereinheit zur Verwendung in einer erfindungsgemäßen Schaltungsanordnung.

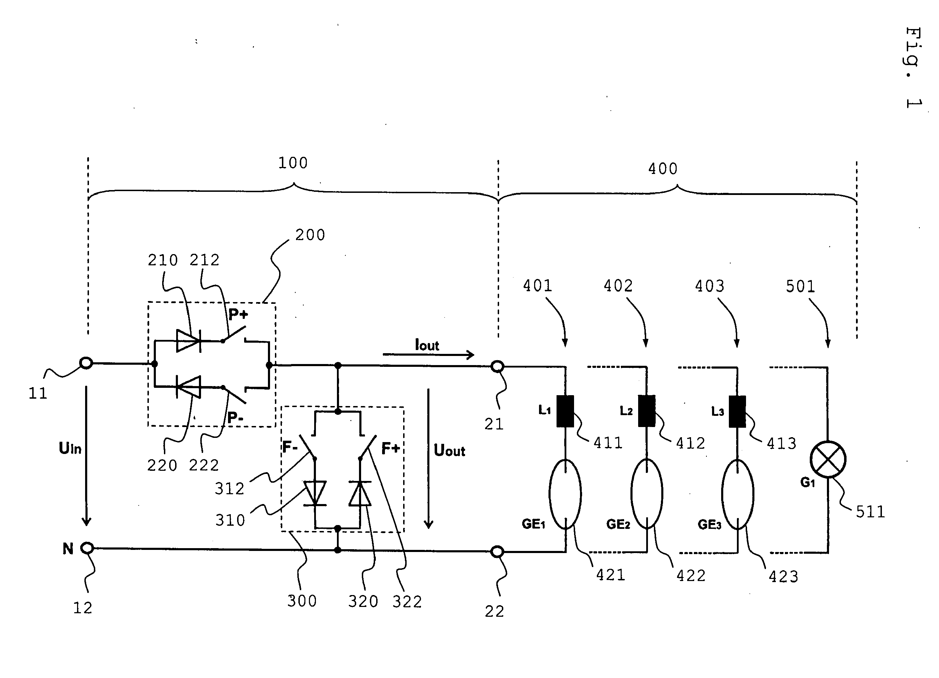

Fig. 1 zeigt ein prinzipielles Schaltbild zur Veranschaulichung des erfindungsgemäßen Wirkprinzips, in welchem eine erfindungsgemäße Schaltungsanordnung 100 über die Eingangsanschlüsse 11 und 12 mit einem Wechselspannungsnetz verbunden ist, wobei der zweite Eingangsanschluss 12 den Netzbezugspunkt bildet, und wobei an die Ausgangsanschlüsse 21 und 22 der Schaltungsanordnung 100 Verbraucher 400 angeschlossen sind.

Prinzipiell bestehen die zum Ausführen eines erfindungsgemäßen Verfahrens erforderlichen Hardware-Komponenten aus vier elektronischen Schaltern 212, 222, 312 und 322, wobei die Schalter jeweils paarweise parallel angeordnet sind und jeder Schalter 212, 222, 312 und 322 im seriellen Zweig jeweils mit einer Diode 210, 220, 310 bzw. 320 verbunden ist. Die Dioden 210 und 220, sowie 310 und 320 sind in gegensätzlicher Durchlassrichtung, bezogen auf die jeweilige parallele Anordnung, angeschlossen. Sind beide Schalter 212 und 222 bzw. 312 und 322 einer parallelen Anordnung geschlossen, kann der Strom in beide Richtungen fließen. Wird nur ein Schalter geschlossen, kann der Strom nur in die Richtung fließen, die von der jeweiligen Diode vorgegeben ist. Die reale Anordnung der Leistungsschalter kann von der in Fig. 1 schematisch dargestellten abweichen. Die Funktionsweise bleibt aber unverändert. Die Schalter 212 und 222 bilden mit den Dioden 210 und 220 eine erste Leistungsschaltereinheit 200, und die Schalter 312 und 322 bilden mit den Dioden 310 und 320 eine zweite Leistungsschaltereinheit 300. Von den zwei Anschlüssen der ersten Leistungsschaltereinheit 200 ist einer mit dem ersten Eingangsanschluss 11 und der andere mit dem ersten Ausgangsanschluss 21 verbunden, während von den zwei Anschlüssen der zweiten Leistungsschaltereinheit 300 einer mit dem ersten Ausgangsanschluss 21 und der andere mit dem zweiten Eingangsanschluss 12 und damit mit dem zweiten Ausgangsanschluss 22 verbunden ist. In der weiteren Beschreibung werden die Schalter 212, 222, 312 und 322 auch gemäß den in Fig. 1 angegebenen Beschriftungen, Schalter 212 als P+, Schalter 222 als P-, Schalter 312 als F- und Schalter 322 als F+, bezeichnet.

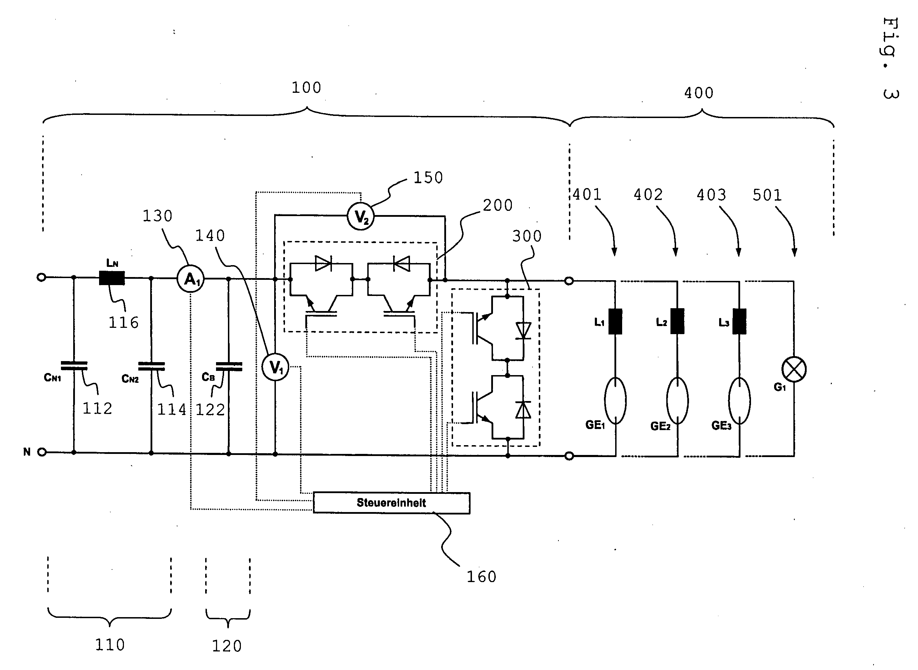

Eine bevorzugte Ausführungsform einer erfindungsgemäßen Schaltungsanordnung 100 ist in Fig. 3 dargestellt. Typischerweise ist die Schaltungsanordnung als separates Gerät 100 ausgebildet.

Wie bereits beschrieben, wird bei dieser Erfindung die Leistungsaufnahme von Verbrauchern reduziert, indem die Ausgangsspannung, im Folgenden auch als Uₒᵤₜ bezeichnet, durch Pulsweitenmodulation der Versorgungsspannung mittels der ersten Leistungssteuereinheit 200 und/oder der zweiten Leistungsschaltereinheit 300 gesteuert wird. Wenn keine Leistungsreduzierung erfolgt, weist die Pulsweitenmodulation ein Tastverhältnis von 1 auf, wobei somit die Ausgangsspannung Uₒᵤₜ im Wesentlichen der Versorgungsspannung Uᵢₙ entspricht. Ist eine Leistungsreduzierung um einen vorgegebenen Faktor gewünscht, erfolgt eine Pulsweitenmodulation der Versorgungsspannung Uᵢₙ mit einem entsprechenden Tastverhältnis, wobei die Pulsweitenmodulation mittels der in Fig. 3 dargestellten Steuereinheit 160 gesteuert wird. Das zur Erreichung einer vorgegebenen Leistungsreduzierung einzustellende Tastverhältnis hängt dabei von der Art der jeweils angeschlossenen Verbraucher ab.

In der in Fig. 3 dargestellten beispielhaften Ausführungsform ist in das Gerät 100 eingangsseitig ein Netzfilter 110 integriert, der bewirkt, dass die pulsförmige Stromaufnahme aus dem Versorgungsnetz geglättet wird. Der Netzfilter umfasst zu diesem Zweck eine mit L_{N} bezeichnete Netzfilterspule 116, sowie mit C_{N1} und C_{N2} bezeichnete Netzfilterkondensatoren 112 und 114. Ferner ist in das Gerät 100 eine Komponente 120 zur Kompensation einer durch die Induktivitäten der Verbraucher 400 verursachten Blindleistung integriert, welche im dargestellten Ausführungsbeispiel einen mit C_{B} bezeichneten Kondensator umfasst.

Die in Fig. 3 dargestellte Steuereinheit 160 umfasst vorzugsweise eine spezielle Hardware mit einem Controller, an die mehrere Messwertaufnehmer angeschlossen sind. Die Funktion der Steuereinheit 160 lässt sich grundlegend in vier Phasen aufteilen, die im Folgenden beschrieben werden.

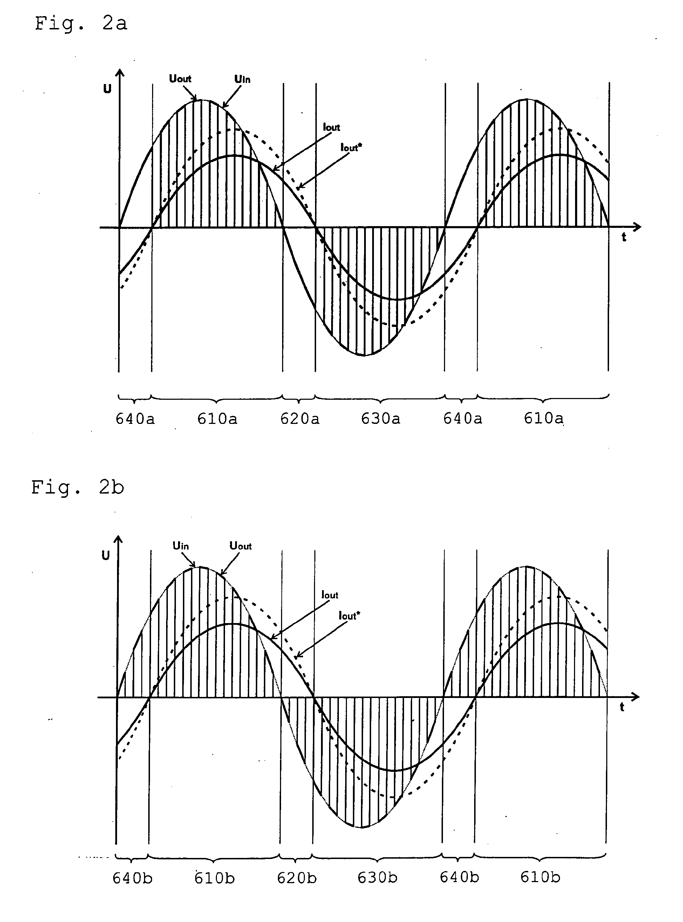

Wieder bezugnehmend auf die Fig. 1 wird als Verbraucher 401, 402 und 403 ein Netz oder Strang von mehreren Gasentladungslampen 421, 422 und 423 mit entsprechender Beschaltung betrachtet, wobei die Beschaltung jeweils eine mit der Gasentladungslampe 421, 422 bzw. 423 in Reihe geschaltete Vorschaltdrossel 411, 412 bzw. 413 umfasst. Als zusätzlicher Verbraucher 501 ist in dem in Fig. 1 dargestellten Beispiel eine Glühlampe 511 vorgesehen. Die sich hieraus ergebende Leistungsaufnahme besteht aus einer induktiven und ohmschen Last, wobei die Gesamtlast einen induktiven Charakter aufweist. Die Wechselspannung eilt somit dem Wechselstrom voraus. Die entsprechenden Verläufe der Eingangsspannung Uᵢₙ, der durch Pulsweitenmodulation der Eingangsspannung Uᵢₙ und gegebenenfalls der Verbraucherspannung erzeugten Ausgangsspannung Uₒᵤₜ, sowie des Ausgangsstroms Iₒᵤₜ und des sich ohne Leistungsreduzierung einstellenden Ausgangsstromes Iₒᵤₜ* sind für ein erstes bevorzugtes Ausführungsbeispiel in Fig. 2a, sowie für ein zweites bevorzugtes Ausführungsbeispiel in Fig. 2b dargestellt.

Durch die Nulldurchgänge der Eingangsspannung Uᵢₙ und des Ausgangsstroms Iₒᵤₜ werden die vier in Fig. 2a dargestellten zeitlichen Phasen 610a, 620a, 630a und 640a bzw. die vier in Fig. 2b dargestellten zeitlichen Phasen 610b, 620b, 630b und 640b definiert. In den jeweiligen vier zeitlichen Phasen erfolgt vorzugsweise eine unterschiedliche Ansteuerung der ersten und zweiten Leistungsschaltereinheiten 200 und 300 durch die Steuereinheit 160. Die einzelnen Phasen werden im Folgenden beschrieben. Dabei werden für unterschiedliche Phasen der Ansteuerung die Bezeichnungen Phase 1, Phase 2A, Phase 2B, Phase 3, sowie Phase 4A und Phase 4B verwendet. Die Ansteuerungs-Phase 1 erfolgt während der in Fig. 2a dargestellten Phase 610a und während der in Fig. 2b dargestellten Phase 610b. Die Ansteuerungs-Phase 2A erfolgt während der in Fig. 2a dargestellten Phase 620a. Die Ansteuerungs-Phase 2B erfolgt während der in Fig. 2b dargestellten Phase 620b. Die Ansteuerungs-Phase 3 erfolgt während der in Fig. 2a dargestellten Phase 630a und während der in Fig. 2b dargestellten Phase 630b. Die Ansteuerungs-Phase 4A erfolgt während der in Fig. 2a dargestellten Phase 640a. Die Ansteuerungs-Phase 4B erfolgt während der in Fig. 2b dargestellten Phase 640b.

### Phase 1:

Die Phase 1 beginnt mit der positiven Flanke von Iₒᵤₜ, d.h. dem Nulldurchgang vom negativen zum positiven Strom bzw. dem Zeitpunkt, zu dem kein negativer Stromfluss mehr detektiert wird. Es werden die Schalter P- und F- geöffnet. Der Schalter F+ wird geschlossen. Über eine Pulsweitemodulation (PWM) wird der Schalter P+ wechselweise geöffnet und geschlossen. Mit dem Pulspausenverhältnis bzw. dem Tastverhältnis wird die Zeitdauer des Stromflusses aus dem Versorgungsnetz pro Periode eingestellt. Die Phase 1 wird von der Phase 2A oder 2B beendet.

### Phase 2A:

Die Phase 2A beginnt mit der negativen Flanke von Uᵢₙ, d.h. dem Nulldurchgang von der positiven Spannung zur negativen. Es werden die Schalter F+ und F- geöffnet und der Schalter P+ geschlossen. Je nach Anforderung kann auch der Schalter P- geschlossen werden. Die Phase 2A wird von der Phase 3 beendet.

### Phase 2B:

Die Phase 2B beginnt mit der negativen Flanke von Uᵢₙ, d.h. dem Nulldurchgang von der positiven Spannung zur negativen. Es werden die Schalter P- und F- geöffnet und der Schalter P+ geschlossen. Über eine Pulsweitenmodulation (PWM) wird der Schalter F+ wechselweise geöffnet und geschlossen. Mit dem Pulspausenverhältnis bzw. dem Tastverhältnis wird die Zeitdauer des Stromflusses in das Versorgungsnetz pro Periode eingestellt. Die Phase 2B wird von der Phase 3 beendet. Je nach Bedarf kann die Phase 2B anstatt der Phase 2A eingesetzt werden.

### Phase 3:

Die Phase 3 beginnt mit der negativen Flanke von Iₒᵤₜ, d.h. dem Nulldurchgang vom positiven zum negativen Strom bzw. dem Zeitpunkt, zu dem kein positiver Stromfluss mehr detektiert wird. Es werden die Schalter P+ und F+ geöffnet. Der Schalter F- wird geschlossen. Über eine Pulsweitenmodulation (PWM) wird der Schalter P- wechselweise geöffnet und geschlossen. Mit dem Pulspausenverhältnis bzw. dem Tastverhältnis wird die Zeitdauer des Stromflusses aus dem Versorgungsnetz pro Periode eingestellt. Die Phase 3 wird von der Phase 4A oder 4B beendet.

### Phase 4A:

Die Phase 4A beginnt mit der positiven Flanke von Uᵢₙ. Es werden die Schalter F- und F+ geöffnet und der Schalter P-geschlossen. Je nach Anforderung kann auch der Schalter P+ geschlossen werden. Die Phase 4A wird von der Phase 1 beendet.

### Phase 4B:

Die Phase 4B beginnt mit der positiven Flanke von Uᵢₙ. Es werden die Schalter P+ und F+ geöffnet und der Schalter P-geschlossen. Über eine Pulsweitenmodulation wird der Schalter F- wechselweise geöffnet und geschlossen. Mit dem Pulspausenverhältnis bzw. dem Tatverhältnis wird die Zeitdauer des Stromflusses in das Versorgungsnetz pro Periode eingestellt. Die Phase 4B wird von der Phase 1 beendet. Je nach Bedarf kann die Phase 4B anstatt der Phase 4A eingesetzt werden.

In der obigen Beschreibung der einzelnen Phasen wird die Stellung jedes Schalters beschrieben. Bei einem Phasenübergang sind jedoch selbstverständlich nur die Schaltzustände der Schalter zu ändern, die nicht in der für die nächste Phase geforderten Position (Ein/Aus) stehen.

An die in Fig. 3 dargestellte Steuereinheit 160, die zur Ansteuerung der ersten und zweiten Leistungsschaltereinheiten 200 und 300 mit diesen verbunden ist, sind ferner die Messwertaufnehmer 130, 140 und 150 angeschlossen.

Im Folgenden wird die Funktion der einzelnen Messwertaufnehmer beschrieben:

Mit dem als V₁ bezeichneten Vorzeichendetektor 140 wird der Nulldurchgang zur positiven oder negativen Versorgungsspannung ermittelt. Er dient zur Aktivierung der Phasen 2A/2B und 4A/4B. Anstatt des Detektors kann auch ein Spannungsmesser verwendet werden.

Der als V₂ bezeichnete Vorzeichendetektor 150 wird für die Bestimmung des Stromflusses über die Leistungsschaltereinheit 200 verwendet. Mit ihm wird das Vorzeichen des Spannungsabfalls über den Komponenten innerhalb der Einheit 200 gemessen und so die Stromrichtung bestimmt. Sind beide Leistungsschalter geöffnet, kann durch das Vorzeichen der Spannung, die sich zwischen den Anschlüssen der Einheit 200 ergibt, auf die zukünftige Richtung des Stromflusses geschlossen werden. Der Detektor 150 aktiviert die Phase 1 bzw. 3. Alternativ ist auch die Verwendung eines Spannungsmessers möglich.

Mit dem als A₁ bezeichneten Strommesser 130 kann in Verbindung mit dem Spannungsmesser 140 die Leistungsaufnahme bezüglich Wirk-, Blind- und Scheinleistung der Verbraucher gemessen werden. Ferner wird der Strommesser 130 für die Erzeugung eines sinusförmigen Eingangsstroms auf der Versorgungsseite bei Verbrauchen mit nicht sinusförmiger Stromaufnahme eingesetzt. Zusätzlich kann mit dem Strommesser 130 eine Überwachung des Stromflusses sowie eine Erkennung von Lampenausfällen erfolgen.

Im Folgenden wird zum einen der Zeitbereich betrachtet, der dem Verbraucher die Energie zuführt und zum anderen der Bereich, in dem der Verbraucher Energie zurückspeist:

In dem Zeitbereich, in dem die Verbraucher 400 Energie aufnehmen, also in den Phasen 1 und 3, besitzen Spannung und Strom das gleiche Vorzeichen. Mit einer Pulsweitenmodulation, die je nach Grad der Leistungsreduktion ein bestimmtes Pulspausenverhältnis aufweist, wird Uᵢₙ mit Uₒᵤₜ verbunden. In den Zeitbereichen ohne Kopplung tritt durch die Spulen der Verbraucher ein Vorzeichenwechsel bei Uₒᵤₜ auf, so dass der Strom über die Schalter F+ oder F-, je nach Vorzeichen von Uᵢₙ, weiter fließen kann.

In dem Zeitbereich, in dem die Verbraucher 400 Energie in das Versorgungsnetz zurückspeisen, also in den Phasen 2A/2B und 4A/4B, besitzen Spannung und Strom gegensätzliche Vorzeichen.

In den Phasen 2A und 4A wird die Verbraucherseite über die Schalter P+ bzw. P-, je nach Vorzeichen von Uᵢₙ, mit der Versorgungsseite verbunden. Die direkte Koppelung der Verbraucherseite mit der Versorgungsseite während der Phasen der Energierückspeisung ist ein besonders vorteilhafter Aspekt der Erfindung.

In den Phasen 2B und 4B werden mittels einer Pulsweitenmodulation, die je nach dem Grad der Leistungsreduktion und dem gewünschten versorgungsseitigen Stromverlauf ein bestimmtes Pulspausenverhältnis aufweist, die Anschlüsse der Verbraucherseite über die Schalter F+ oder F-, je nach Vorzeichen von Uᵢₙ, verbunden. Der durch den magnetischen Fluss in den Verbraucherspulen verursachte Strom wird somit aufrecht erhalten. In den Zeitbereichen ohne Kopplung tritt durch die Spulen der Verbraucher eine Spannungserhöhung auf, so dass der Strom über die Schalter P+ oder P-, je nach Vorzeichen von Uᵢₙ, fließt. Auf diese Weise kann besonders vorteilhaft das Maß der Energierückspeisung und insbesondere der versorgungsseitige Stromverlauf gesteuert werden.

Der Phasentyp A wird vorzugsweise bei Verbrauchern eingesetzt, die bei der beschriebenen Methode einen sinusförmigen Stromverlauf aufweisen, oder bei Versorgungsnetzen, die keinen sinusförmigen Verbraucherstrom erfordern. Der Phasentyp B ist insbesondere in Versorgungsnetzen vorteilhaft einsetzbar, die einen sinusförmigen Verlauf des Verbraucherstroms voraussetzen.

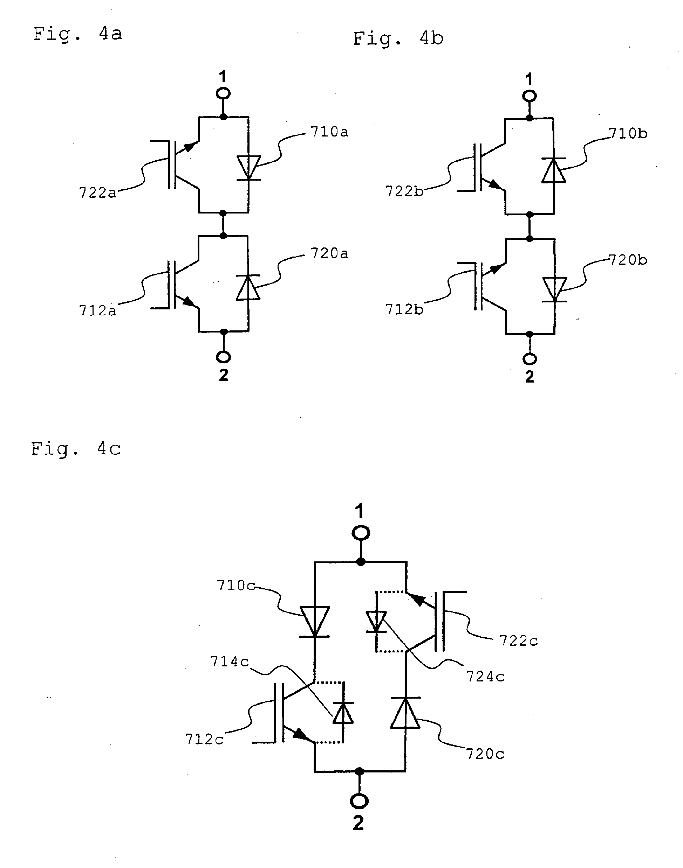

In den Figuren 4a bis 4e sind verschiedene vorteilhafte Ausführungsformen für die Leistungsschaltereinheiten 200 und 300 dargestellt, wobei die in Fig. 4a gezeigte Ausführungsform derjenigen entspricht, die in der in Fig. 3 dargestellten beispielhaften Ausführungsform des Gerätes 100 für die erste und zweite Leistungsschaltereinheit 200 und 300 verwendet wird.

Die in Fig. 4a dargestellte Ausführungsform einer Leistungsschaltereinheit umfasst zwei Leistungsschalter 712a und 722a, welche jeweils mit einer der Dioden 720a bzw. 710a parallel geschaltet sind, wobei die sich dadurch bildenden Parallelschaltungen in Reihe zwischen den Anschlüssen 1 und 2 geschaltet sind. Die Leistungsschalter 712a und 722a sind vorzugsweise als elektronischer Halbleiterschalter, insbesondere als Leistungstransistor, beispielsweise als IGBT (Insulated Gate Bipolar Transistor), ausgebildet, und weisen dementsprechend eine definierte Durchlassrichtung auf. Bezogen auf die Anschlüsse 1 und 2 weisen der Schalter 712a und die Diode 710a sowie der Schalter 722a und die Diode 720a die gleiche Durchlassrichtung auf. Die Dioden 710a und 720a sind ferner so angeordnet, dass diese bezüglich der Anschlüsse 1 und 2 eine unterschiedliche Durchlassrichtung aufweisen. Um die Leistungsschaltereinheit in Richtung vom Anschluss 1 zum Anschluss 2 leitend oder sperrend zu schalten, dient der Schalter 712a, für die Gegenrichtung dient der Schalter 722a. Der Aufbau entspricht somit einer Parallelschaltung des Schalters 712a in Reihe mit Diode 710a und des Schalters 722a in Reihe mit Diode 720a.

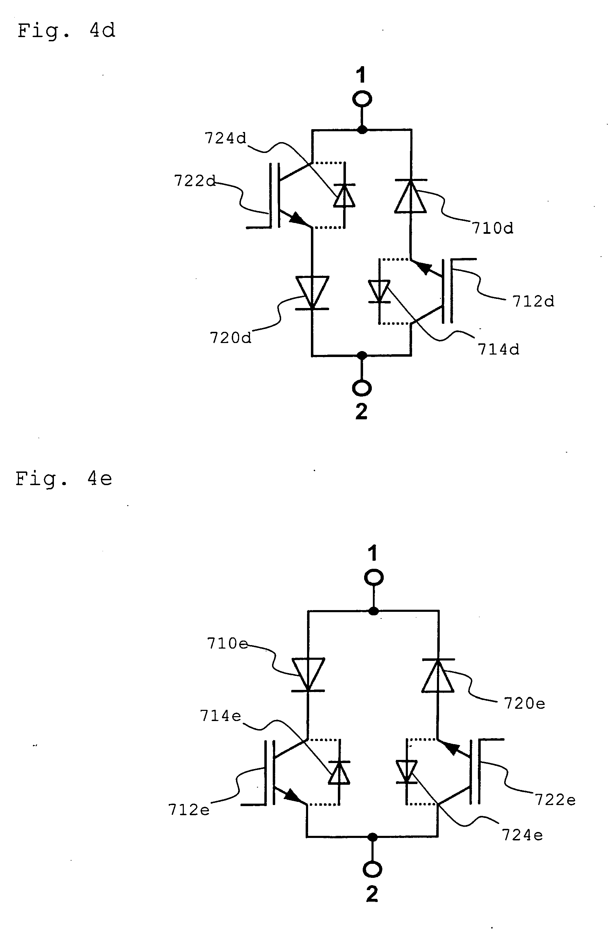

Alternativ können auch die in den Figuren 4b, 4c, 4d und 4e dargestellten Typen eingesetzt werden.

Die in Fig. 4b dargestellte Leistungsschaltereinheit hat einen zu der in Fig. 4a gezeigten Ausführungsform analogen Aufbau, wobei die jeweiligen Durchlassrichtungen der Dioden 710b und 720b, sowie der Schalter 712b und 722b umgedreht sind.

Die in den Figuren 4c, 4d und 4e dargestellten Ausführungsformen weisen jeweils zwei parallel zwischen ihren beiden Anschlüssen 1 und 2 angeordnete Schaltungszweige auf, die jeweils eine Diode 710c, 720c, 710d, 720d, 710e bzw. 720e und einen mit der jeweiligen Diode in Reihe geschalteten Leistungsschalter 712c, 722c, 712d, 722d, 712e bzw. 722e aufweisen, wobei die Diode in dem einen Schaltungszweig und die Diode in dem anderen Schaltungszweig in entgegengesetzter Durchlassrichtung angeordnet sind. Bei den in den Figuren 4c, 4d und 4e dargestellten Ausführungsformen ist ferner die Verwendung von Freilaufdioden 714c, 724c, 714d, 724d, 714e bzw. 724e zum Schutz der jeweiligen Leistungsschalter 712c, 722c, 712d, 722d, 712e bzw. 722e vorgesehen.

Die Implementierung der Leistungsschaltereinheiten in das Gerät 100 kann sowohl von Bezugspunkt 1 zum Bezugspunkt 2 als auch umgekehrt, also um 180° gedreht, erfolgen.

Mit der vorliegenden Erfindung ist es besonders vorteilhaft möglich, ein kostengünstiges Gerät zu entwickeln, das sich einfach in vorhandene Wechselstromnetze mit Leuchtmitteln als Verbraucher integrieren lässt. Besonders vorteilhaft können verschiedene Lampenarten in einem gemeinsamen Netz betrieben werden.

Zudem sind die Leistungsverluste bei einem erfindungsgemäßen Verfahren zum Steuern der Leistungsaufnahme gering, da nur ein Spannungsabfall über den Dioden und Leistungsschaltern entsteht. Bei aus dem Stand der Technik bekannten Verfahren, die in diesem Bereich eingesetzt werden, treten im Gegensatz dazu in nachteiliger Weise zusätzliche Verluste bei der Gleichrichtung der Wechselspannung und im Gleichstromzwischenkreis auf.

## Patentansprüche

1. Schaltungsanordnung (100) zur Steuerung der Leistungsaufnahme von zum Betreiben in einem Wechselspannungsnetz ausgebildeten Verbrauchern (401-403, 501), umfassend
- einen ersten und einen zweiten Eingangsanschluss (11, 12) zum Anschließen an eine Versorgungsspannung eines Wechselspannungsnetzes und einen ersten und zweiten Ausgangsanschluss (21, 22) zum parallelen Anschließen der Verbraucher (401-403, 501), wobei der zweite Eingangsanschluss (12) und der zweite Ausgangsanschluss (22) miteinander verbunden sind,
- eine erste Leistungsschaltereinheit (200) mit zwei Anschlüssen, von denen einer mit dem ersten Eingangsanschluss (11) und der andere mit dem ersten Ausgangsanschluss (21) verbunden ist, und eine zweite Leistungsschaltereinheit (300) mit zwei Anschlüssen, von denen einer mit dem ersten Ausgangsanschluss (21) und der andere mit dem zweiten Ausgangsanschluss (22) verbunden ist, wobei jede der Leistungsschaltereinheiten (200, 300) derart steuerbar ausgebildet ist, dass diese zwischen ihren jeweiligen beiden Anschlüssen (1, 2) in jede der beiden Richtungen unabhängig voneinander wahlweise einen leitenden oder sperrenden Schaltzustand annehmen kann,
- eine mit der ersten und zweiten Leistungsschaltereinheit verbundene Steuereinheit (160), welche dazu ausgebildet ist, die Leistungsschaltereinheiten (200, 300) derart anzusteuern, dass die Verbraucher (401-403, 501) in sich abwechselnden zeitlichen Phasen Energie aus dem Wechselspannungsnetz aufnehmen und Energie in das Wechselspannungsnetz zurückspeisen, wobei während der Phasen der Leistungsaufnahme die Versorgungsspannung zur Steuerung der Leistungsaufnahme pulsweitenmoduliert wird.

2. Schaltungsanordnung nach Anspruch 1, wobei die Steuereinheit (160) dazu ausgebildet ist, die Leistungsschaltereinheiten (200, 300) derart anzusteuern, dass während der Phasen der Energierückspeisung die Verbraucherspannung zur Steuerung der Energierückspeisung pulsweitenmoduliert wird.

3. Schaltungsanordnung nach einem der Ansprüche 1 oder 2, ausgebildet zum Betreiben von Verbrauchern, welche wenigstens einen Verbraucher (401-403) umfassen, der als eine Reihenschaltung einer Gasentladungslampe (421-423) und einer Induktivität (411-413) ausgebildet ist.

4. Schaltungsanordnung nach einem der vorstehenden Ansprüche, wobei jede der Leistungsschaltereinheiten (200, 300) zwei parallel zwischen ihren beiden Anschlüssen (1, 2) angeordnete Schaltungszweige aufweist, die jeweils eine Diode (210, 310, 710a-710e; 220, 320, 720a-720e) und einen mit der Diode in Reihe geschalteten Leistungsschalter (212, 312, 712a-712e; 222, 322, 722a-722e) aufweisen, wobei die Diode (210, 310, 710a-710e) in dem einen Schaltungszweig und die Diode (220, 320, 720a-720e) in dem anderen Schaltungszweig in entgegengesetzter Durchlassrichtung angeordnet sind.

5. Schaltungsanordnung nach einem der vorstehenden Ansprüche, wobei die Steuereinheit (160) dazu ausgebildet ist, die Leistungsschaltereinheiten (200, 300) derart anzusteuern, dass während einer Periode der Versorgungsspannung vier zeitlich aufeinanderfolgende Phasen durchlaufen werden, wobei
- in der ersten Phase (610a) am ersten Eingangsanschluss (11) relativ zum zweiten Eingangsanschluss (12) eine positive Spannung anliegt, die erste Leistungsschaltereinheit (200) in Richtung vom ersten Eingangsanschluss (11) zum ersten Ausgangsanschluss (21) wechselweise leitet und sperrt, um eine pulsweitenmodulierte Ausgangspannung zu generieren und in Richtung vom ersten Ausgangsanschluss (21) zum ersten Eingangsanschluss (11) sperrt, die zweite Leistungsschaltereinheit (300) in Richtung vom zweiten Ausgangsanschluss (22) zum ersten Ausgangsanschluss (21) leitet und in Gegenrichtung sperrt, so dass durch die Verbraucher vom ersten Ausgangsanschluss (21) zum zweiten Ausgangsanschluss (22) ein Strom fließt, dessen Stromstärke durch die Pulsweite der Pulsweitenmodulation gesteuert wird,
- in der zweiten Phase (620a) am ersten Eingangsanschluss (11) relativ zum zweiten Eingangsanschluss (12) eine negative Spannung anliegt, die erste Leistungsschaltereinheit (200) in Richtung vom ersten Eingangsanschluss (11) zum ersten Ausgangsanschluss (21) leitet, die zweite Leistungsschaltereinheit (300) in beiden Richtungen sperrt, wobei durch einen durch die Verbraucher vom ersten Ausgangsanschluss (21) zum zweiten Ausgangsanschluss (22) fließenden Strom eine Energierückspeisung in das Wechselspannungsnetz erfolgt;
- in der dritten Phase (630a) am ersten Eingangsanschluss (11) relativ zum zweiten Eingangsanschluss (12) eine negative Spannung anliegt, die erste Leistungsschaltereinheit (200) in Richtung vom ersten Ausgangsanschluss (21) zum ersten Eingangsanschluss (11) wechselweise leitet und sperrt, um eine pulsweitenmodulierte Ausgangspannung zu generieren und in Richtung vom ersten Eingangsanschluss (11) zum ersten Ausgangsanschluss (21) sperrt, die zweite Leistungsschaltereinheit (300) in Richtung vom ersten Ausgangsanschluss (21) zum zweiten Ausgangsanschluss (22) leitet und in Gegenrichtung sperrt, so dass durch die Verbraucher vom zweiten Ausgangsanschluss (22) zum ersten Ausgangsanschluss (21) ein Strom fließt, dessen Stromstärke durch die Pulsweite der Pulsweitenmodulation gesteuert wird, und
- in der vierten Phase (640a) am ersten Eingangsanschluss (11) relativ zum zweiten Eingangsanschluss (12) eine positive Spannung anliegt, die erste Leistungsschaltereinheit (200) in Richtung vom ersten Ausgangsanschluss (21) zum ersten Eingangsanschluss (11) leitet, die zweite Leistungsschaltereinheit (300) in beiden Richtungen sperrt, wobei durch einen durch die Verbraucher vom zweiten Ausgangsanschluss (22) zum ersten Ausgangsanschluss (21) fließenden Strom eine Energierückspeisung in das Wechselspannungsnetz erfolgt.

6. Schaltungsanordnung nach einem der vorstehenden Ansprüche, wobei die Steuereinheit (160) dazu ausgebildet ist, die Leistungsschaltereinheiten (200, 300) derart anzusteuern, dass während einer Periode der Versorgungsspannung vier zeitlich aufeinanderfolgende Phasen durchlaufen werden, wobei
- in der ersten Phase (610b) am ersten Eingangsanschluss (11) relativ zum zweiten Eingangsanschluss (12) eine positive Spannung anliegt, die erste Leistungsschaltereinheit (200) in Richtung vom ersten Eingangsanschluss (11) zum ersten Ausgangsanschluss (21) gemäß einer ersten Pulsweitenmodulation wechselweise leitet und sperrt, um eine pulsweitenmodulierte Ausgangspannung zu generieren, und in Richtung vom ersten Ausgangsanschluss (21) zum ersten Eingangsanschluss (11) sperrt, die zweite Leistungsschaltereinheit (300) in Richtung vom zweiten Ausgangsanschluss (22) zum ersten Ausgangsanschluss (21) leitet und in Gegenrichtung sperrt, so dass durch die Verbraucher vom ersten Ausgangsanschluss (21) zum zweiten Ausgangsanschluss (22) ein Strom fließt, dessen Stromstärke durch die Pulsweite der ersten Pulsweitenmodulation gesteuert wird,
- in der zweiten Phase (620b) am ersten Eingangsanschluss (11) relativ zum zweiten Eingangsanschluss (12) eine negative Spannung anliegt, die erste Leistungsschaltereinheit (200) in Richtung vom ersten Eingangsanschluss (11) zum ersten Ausgangsanschluss (21) leitet und in Gegenrichtung sperrt, die zweite Leistungsschaltereinheit (300) in Richtung vom zweiten Ausgangsanschluss (22) zum ersten Ausgangsanschluss (21) gemäß einer zweiten Pulsweitenmodulation wechselweise leitet und sperrt, und in Gegenrichtung sperrt, wobei durch einen durch die Verbraucher vom ersten Ausgangsanschluss (21) zum zweiten Ausgangsanschluss (22) fließenden Strom eine durch die Pulsweite der zweiten Pulsweitenmodulation gesteuerte Energierückspeisung in das Wechselspannungsnetz erfolgt,
- in der dritten Phase (630b) am ersten Eingangsanschluss (11) relativ zum zweiten Eingangsanschluss (12) eine negative Spannung anliegt, die erste Leistungsschaltereinheit (200) in Richtung vom ersten Ausgangsanschluss (21) zum ersten Eingangsanschluss (11) gemäß der ersten Pulsweitenmodulation wechselweise leitet und sperrt, um eine pulsweitenmodulierte Ausgangspannung zu generieren, und in Richtung vom ersten Eingangsanschluss (11) zum ersten Ausgangsanschluss (21) sperrt, die zweite Leistungsschaltereinheit (300) in Richtung vom ersten Ausgangsanschluss (21) zum zweiten Ausgangsanschluss (22) leitet und in Gegenrichtung sperrt, so dass durch die Verbraucher vom zweiten Ausgangsanschluss (22) zum ersten Ausgangsanschluss (21) ein Strom fließt, dessen Stromstärke durch die Pulsweite der ersten Pulsweitenmodulation gesteuert wird, und
- in der vierten Phase (640b) am ersten Eingangsanschluss (11) relativ zum zweiten Eingangsanschluss (12) eine positive Spannung anliegt, die erste Leistungsschaltereinheit (200) in Richtung vom ersten Ausgangsanschluss (21) zum ersten Eingangsanschluss (11) leitet und in Gegenrichtung sperrt, die zweite Leistungsschaltereinheit (300) in Richtung vom ersten Ausgangsanschluss (21) zum zweiten Ausgangsanschluss (22) gemäß der zweiten Pulsweitenmodulation wechselweise leitet und sperrt, und in Gegenrichtung sperrt, wobei durch einen durch die Verbraucher vom zweiten Ausgangsanschluss (22) zum ersten Ausgangsanschluss (21) fließenden Strom eine durch die Pulsweite der zweiten Pulsweitenmodulation gesteuerte Energierückspeisung in das Wechselspannungsnetz erfolgt.

7. Schaltungsanordnung nach einem der vorstehenden Ansprüche, umfassend Netzfilter-Komponenten (110) zur Glättung der pulsförmigen Stromaufnahme aus dem Wechselspannungsnetz.

8. Schaltungsanordnung nach einem der vorstehenden Ansprüche, umfassend Komponenten (120) zur Kompensation einer durch die Induktivitäten (411-413) verursachten Blindleistung.

9. Schaltungsanordnung nach einem der vorstehenden Ansprüche, umfassend wenigstens eine Spannungs-Messeinrichtung (140, 150) zum Messen einer Spannung und/oder zum Detektieren des Vorzeichens einer Spannung.

10. Schaltungsanordnung nach Anspruch 9, wobei eine Spannungs-Messeinrichtung (150) zum Messen des an der ersten Leistungsschaltereinheit (200) abfallenden Spannung angeordnet ist.

11. Schaltungsanordnung nach Anspruch 9 oder 10, wobei eine Spannungs-Messeinrichtung (140) zum Messen der an den Eingangsanschlüssen (11, 12) anliegenden Spannung angeordnet ist.

12. Schaltungsanordnung nach einem der vorstehenden Ansprüche, umfassend wenigstens einen Strommesser (130).

13. Verfahren zur Steuerung der Leistungsaufnahme von zum Betreiben in einem Wechselspannungsnetz ausgebildeten Verbrauchern (401-40N, 501), wobei wenigstens ein Verbraucher (401-40N) als eine Reihenschaltung einer Gasentladungslampe (421-423) und einer Induktivität (411-413) ausgebildet ist, unter Verwendung einer Schaltungsanordnung (100) gemäß einem der Ansprüche 1 bis 12, wobei die Leistungsschaltereinheiten (200, 300) mittels der Steuereinheit (160) derart angesteuert werden, dass die Verbraucher (401-40N, 501) in sich abwechselnden zeitlichen Phasen Energie aus dem Wechselspannungsnetz aufnehmen und Energie in das Wechselspannungsnetz zurückspeisen, wobei während der Phasen der Leistungsaufnahme die Versorgungsspannung zur Steuerung der Leistungsaufnahme pulsweitenmoduliert wird.

14. Verfahren nach Anspruch 13, wobei während der Phasen der Energierückspeisung die Verbraucherspannung zur Steuerung der Energierückspeisung pulsweitenmoduliert wird.

15. Steuereinheit (160), ausgebildet zum Ausführen eines Verfahrens gemäß einem der Ansprüche 13 oder 14.
